# FASCICULE DE BREVET EUROPEEN

(11) **EP 0 887 913 B1**
(45) Date de publication et mention de la délivrance du brevet: **29.02.2012**
(21) Numéro de dépôt: 98111330.1
(22) Date de dépôt: 19.06.1998
(51) Int. Cl.: H02P 6/06, H02P 6/14, H02K 21/24, H02K 29/12

(54) **Procédé de commande d'un micromoteur à rotation continue**
Verfahren zur Steuerung eines Mikromotors mit konstanter Drehzahl
Method to control a micromotor at constant speed

(30) Priorité: 24.06.1997 CH 152697; 25.06.1997 EP 97110377
(43) Date de publication de la demande: 30.12.1998
(73) Titulaire: ASULAB S.A., 2501 Bienne (CH)
(72) Inventeur: Bühler, Roger, 2400 Le Locle (CH)
(74) Mandataire: Balsters, Robert

(56) Documents cités:
- EP-A- 0 089 577
- FR-A- 2 076 493

## Description

La présente invention concerne un procédé de commande d'un micromoteur à rotation continue. En particulier, ce micromoteur est destiné à équiper une pièce d'horlogerie. De préférence, le micromoteur commandé par le procédé selon la présente invention est du type à aimant(s) permanent(s) porté(s) par le rotor et à enroulement(s) fixe(s) porté(s) par le stator.

Le document EP 0 089 577 décrit un procédé de commande d'un moteur ayant un rotor à aimant permanent et un stator avec un enroulement multipolaire. Le procédé prévoit l'utilisation d'un circuit de commande digital qui est agencé pour fournir à l'enroulement des impulsions d'entretien de la rotation du rotor qui sont centrées sur les sommets de la courbe de tension induite pour le rotor dans chaque pôle de l'enroulement. Ce procédé permet de fournir une énergie constante à chaque impulsion d'entretien même lorsque la vitesse du rotor varie.

Dans un premier mode de réalisation du micromoteur, il est prévu trois enroulements statoriques servant à l'entraînement du rotor, alors que dans un deuxième mode de réalisation, il est prévu seulement deux enroulements servant à l'entraînement du rotor et disposés de manière opposée l'un à l'autre relativement à l'arbre du rotor. Chacun de ces deux modes de réalisation a ses propres avantages qui seront décrits plus en détails par la suite.

Dans un mode de réalisation particulier du micromoteur, le rotor comporte deux flasques magnétiques oblongs et quatre aimants bipolaires situés respectivement dans les quatre régions d'extrémité des deux flasques agencés l'un en regard de l'autre. Ce rotor définit essentiellement un seul circuit magnétique principal. La totalité de la masse entraînée en rotation, à l'exception de l'arbre et d'une structure porteuse éventuelle, sert au fonctionnement magnétique du micromoteur. Le couplage magnétique entre les aimants permanents du rotor et les enroulements statoriques est particulièrement bon dans ce mode de réalisation.

Selon une caractéristique particulière, il est prévu en périphérie du micromoteur un aimant bipolaire de positionnement du rotor servant à maintenir le rotor dans une position angulaire prédéfinie lorsque ce dernier est au repos. Grâce à cette caractéristique, il est possible d'assurer un démarrage efficace de la rotation du rotor dans le sens de rotation prévu.

Le but de la présente invention est de fournir un procédé de commande d'un micromoteur à rotation continue qui soit efficace et permette d'assurer une stabilité de la rotation sans nécessiter un asservissement sophistiqué.

A cet effet, la présente invention concerne un procédé de commande d'un micromoteur à rotation continue comprenant un rotor portant des aimants permanents et un stator portant au moins une bobine reliée électriquement à des moyens de commande et d'alimentation, lesdits aimants permanents étant agencés radialement sur ledit rotor relativement cette une bobine de manière que la rotation dudit rotor engendre dans la bobine une tension induite variable définissant une courbe de tension induite alternative au cours du temps, ce procédé étant caractérisé en ce qu'il est prévu d'entretenir la rotation dudit rotor par des impulsions successives fournies, dans des demi-périodes respectives de ladite courbe de tension induite, dont la valeur temporelle moyenne est située, pour une vitesse de rotation de référence, avant la valeur temporelle correspondant à la valeur absolue maximale de la tension induite dans chacune de ces demi-périodes.

Grâce à ces caractéristiques, une auto-régulation de la vitesse de rotation est obtenue.

Selon des caractéristiques particulières avantageuses de l'invention, l'intervalle de temps entre un passage par zéro de la courbe de tension induite, définissant le début d'une quelconque demi-période, et le début d'une impulsion d'entretien, prévue dans cette demi-période, est constant.

Selon d'autres caractéristiques particulières de l'invention, la durée des impulsions d'entretien est variable, notamment en fonction de la charge appliquée au micromoteur ou d'un écart constaté entre la position angulaire du rotor et une position angulaire de référence déterminée par les moyens de commande.

La présente invention sera décrite de manière plus détaillée à l'aide de la description suivante, faite en référence aux dessins annexés, donnés à titre d'exemples non-limitatifs, dans lesquels :
- la figure 1 est une vue de dessus d'un mode de réalisation d'un moteur à rotation continue;
- la figure 2 est une vue en coupe selon la ligne II-II de la figure 1;
- la figure 3 est un schéma d'un mode de réalisation d'une commande d'un micromoteur à rotation continue;
- la figure 4 représente un procédé de commande selon l'invention d'un micromoteur à rotation continue, et
- la figure 5 montre schématiquement un effet d'autorégulation résultant du procédé de commande selon l'invention.

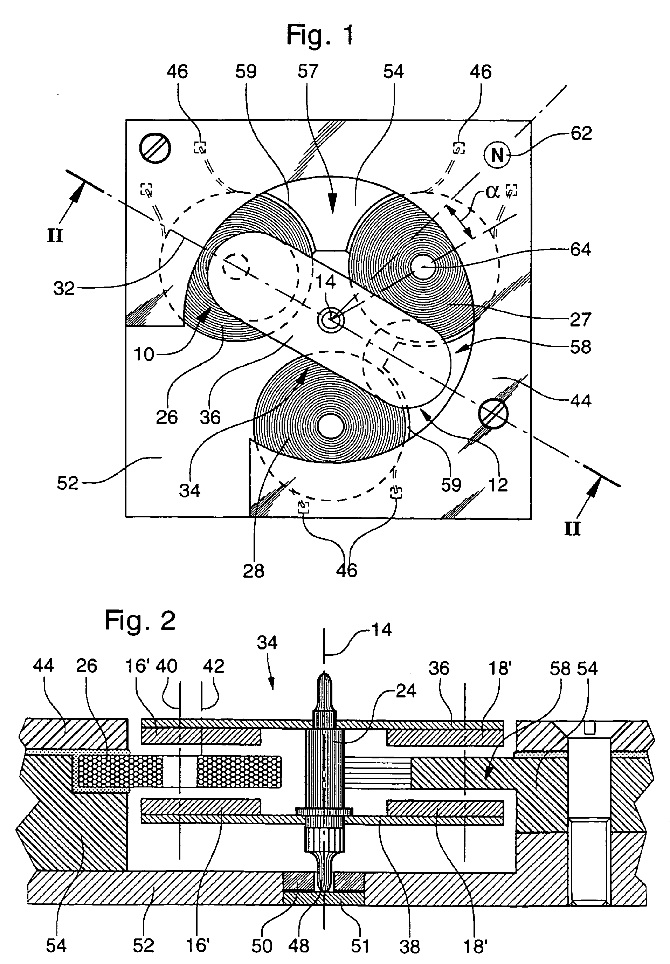

A l'aide des figures 1 et 2, on décrira ci-après une variante de réalisation d'un micromoteur à rotation continue. Les flasques 36 et 38 du rotor 34 présentent dans un plan perpendiculaire à l'axe de rotation 14 une forme oblongue dont les deux régions d'extrémité 10 et 12 présentent un contour extérieur en demi-cercle, les quatre aimants bipolaire portés par le rotor ayant une forme circulaire. L'axe central 40 de chacun des trois enroulements plats 26, 27 et 28 n'est pas confondu avec l'axe 42 défini par les axes magnétiques passant par les centres de gravité des quatre aimants bipolaires 16' et 18'. En effet, afin d'augmenter, pour des dimensions données du rotor 34, les dimensions des enroulements plats 26, 27 et 28, l'axe central 40 des enroulements est situé à une distance supérieure de l'axe de rotation 14 que l'axe 42 défini ci-dessus. Dans une autre variante, ces deux axes sont confondus.

Concernant les enroulements plats 26, 27 et 28, les plages de valeurs optimales déterminées sont les suivantes : Rayon de chaque enroulement situé entre 1 mm et 4 mm; hauteur située environ entre 0.4 mm et 1 mm; épaisseur du fil conducteur formant l'enroulement située environ entre 10 µm et 20 µm. L'espace prévu entre les bobines et les aimants a une valeur d'environ 0.2 mm pour assurer un montage aisé et un fonctionnement sûr. Toutefois, ces valeurs ne sont pas limitatives.

De plus, étant donné que la consommation d'énergie par unité de temps est sensiblement proportionnelle au nombre de tours par seconde effectués par le rotor 34, il est préférable d'avoir une vitesse de rotation angulaire du rotor relativement basse, cette vitesse étant comprise de préférence dans la plage 1 à 10 tours par seconde. Toutefois, comme les essais et simulations l'ont montré, il y a lieu de tenir compte des perturbations et chocs pouvant perturber le fonctionnement du micromoteur et notamment du ralentissement pouvant être provoqué par de tels perturbations ou chocs. Ainsi, la vitesse minimale prévue pour un moteur donné doit tenir compte de ces situations de perturbations ou de chocs. Par exemple, pour des micromoteurs dont le rayon extérieur est situé entre 5 mm et 10 mm, une vitesse de rotation angulaire située aux environ de 5 tours par seconde donne d'excellents résultats au niveau de la consommation électrique et de la fiabilité de fonctionnement d'un tel micromoteur.

Afin de positionner et de maintenir en place les enroulements plats 26, 27 et 28, ces derniers sont fixés partiellement sur un circuit imprimé 44 sur lequel sont prévus des pistes de conduction électrique dont certaines aboutissent sur des plages 46 de connexion électrique aux extrémités des enroulements.

Un des deux pivots 48 de l'arbre central 24 est monté dans un palier 50 prévu dans une platine 52. Un contre-pivot 51 est prévu dans cette réalisation. Entre la platine 52 et le circuit imprimé 44 est prévue une pièce intermédiaire ou entretoise 54 qui est collée au circuit imprimé 44 et fixée à la platine 52 au moyen de vis ou d'autres moyens de fixation connus de l'homme du métier.

L'entretoise 54 présente trois creusures ou évidements circulaires dans lesquels prennent place partiellement les trois enroulements 26, 27 et 28. Ces évidements sont remplis par une colle servant au maintien rigide des bobines ou enroulements plats, lesquels sont tenus entre le circuit imprimé 44 et l'entretoise 54. L'entretoise 54 sert aussi à définir le positionnement axial des enroulements. On remarquera encore que l'entretoise 54 présente deux parties saillantes 57 et 58 situées au niveau des enroulements et présentant une hauteur sensiblement égale à ces enroulements. Ces parties 57 et 58 servant également au positionnement et au maintien des enroulements plats au moyen d'un liant 59 prévu entre ces parties 57 et 58 et une partie de la surface latérale des enroulements. Toutefois, la présence des parties 57 et 58 ne sont pas indispensables au maintien rigide des bobines dans le cadre de la présente construction.

L'arbre central 24 peut être en matériau magnétique ou en matériau non-magnétique, notamment dans un matériau non-magnétique léger et rigide. Etant donné que les pertes par frottement sont les premières responsables de la consommation électrique du micromoteur, l'homme du métier portera une attention particulière au montage de l'arbre central 24 dans les paliers destinés à recevoir les pivots de cet arbre central. En particulier, il est possible de prévoir des paliers à roulements à billes avec des surfaces de contact minimale entre l'arbre central 24 et les paliers dans lesquels il est monté. Ensuite, la lubrification de ces paliers peut être importante et l'homme du métier connaît notamment des matériaux autolubrifiants qui peuvent être avantageux. Dans le cas de la variante décrite ici, les surfaces de contact entre l'arbre 24 et le palier 50 sont réduites au minimum en diminuant notamment le diamètre des pivots et la surface de contact latérale.

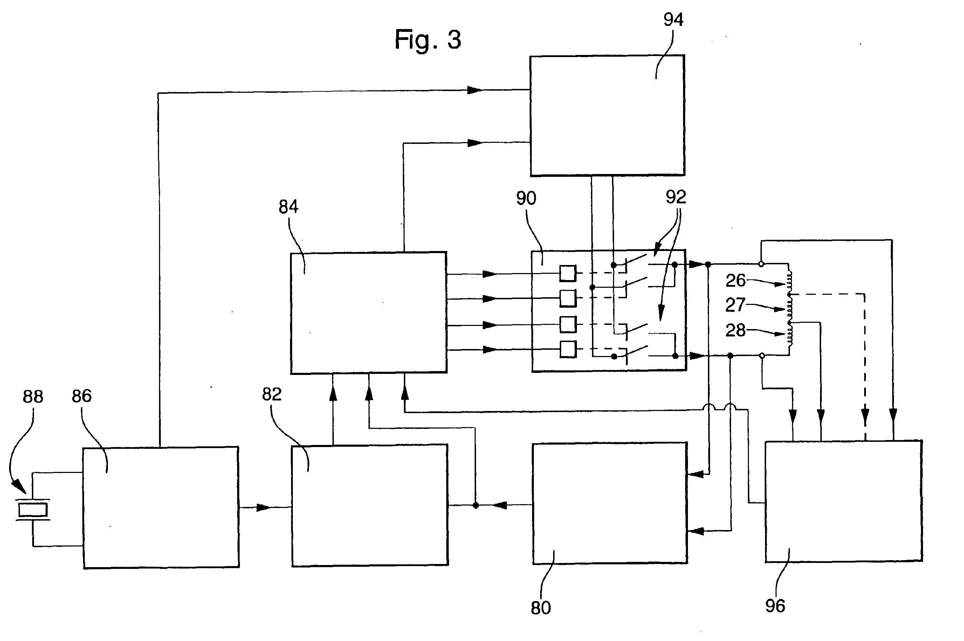

A la figure 3 est décrit un circuit de commande du micromoteur décrit ci-avant. Les trois enroulements plats 26, 27 et 28 sont reliés électriquement en série. Ces trois enroulements sont agencés autour de l'axe de rotation 14 de manière régulière avec un décalage angulaire de 120°. Etant donné l'agencement des enroulements plats et du rotor, notamment des aimants bipolaires, la rotation du rotor engendre un signal induit total dont la période correspond à une rotation du rotor de 120°, c'est-à-dire que ce signal induit de forme sensiblement sinusoïdale a une fréquence électrique trois fois plus élevée que la fréquence de rotation angulaire du rotor exprimée en tours par seconde.

Afin de mesurer la vitesse de rotation du rotor, il est prévu des moyens de détection 80 de passage par zéro du signal induit dans les enroulements statoriques. Ces moyens sont notamment formés par un amplificateur différentiel et un comparateur. Les moyens 80 fournissent en sortie un signal de vitesse de rotation quasi instantanée du rotor à un compteur 82 et également à des moyens de régulation 84 de la vitesse de rotation du rotor. Le compteur 82 est relié à une base de temps 86, associée à un quartz 88, qui permet ainsi de déterminer une avance ou un retard du rotor relativement à une vitesse de rotation de référence prédéfinie.

Le compteur 82 est relié également au moyen de régulation 84 qui agissent sur les moyens de commande 90 dans lesquels sont agencés des interrupteurs 92 actionnés électriquement par les moyens de régulation 84. Quatre interrupteurs 92 sont prévus de manière à pouvoir donner des impulsions de durée limitée et de polarité négative ou positive. Les interrupteurs 92 sont reliés électriquement à une alimentation 94, laquelle peut être également reliée aux moyens de régulation 84 et à la base de temps 86, notamment lorsqu'il est prévu d'envoyer des impulsions hachées et de varier le taux de hachage pour les besoins de la régulation de vitesse angulaire du rotor et du niveau de tension selon que l'on se trouve dans la phase de démarrage ou d'entretien de la rotation du rotor, comme cela sera expliqué ci-après.

Pour déterminer de manière sûre et efficace le sens de rotation du rotor, il est prévu des moyens 96 de détection du sens de rotation dont trois entrées sont reliées aux extrémités des deux enroulements 27 et 28. Pour augmenter la précision et la fiabilité de la détection par les moyens 96, il est prévu, dans une variante, que ces moyens 96 sont également reliés en entrée aux deux bornes du troisième enroulement plat 26. Le sens de rotation où la variation de ce sens de rotation détecté par les moyens 96 sont communiqués au moyen de régulation 84. Une variation de sens de rotation peut notamment intervenir en cas de chocs violents successifs subit par le micromoteur. Dans ce cas, il est nécessaire d'agencer les moyens de régulation de manière à stopper immédiatement le fonctionnement du micromoteur, de redémarrer dans le sens correct et de rattraper ensuite le nombre de tours de rotation manqués relativement à la vitesse de rotation de référence. Pour ce faire, le compteur 82 sert à calculer le retard engendré par une telle situation. L'homme du métier sait agencer les divers modules électroniques représentés à la figure 3 pour commander le micromoteur selon l'enseignement donné ici.

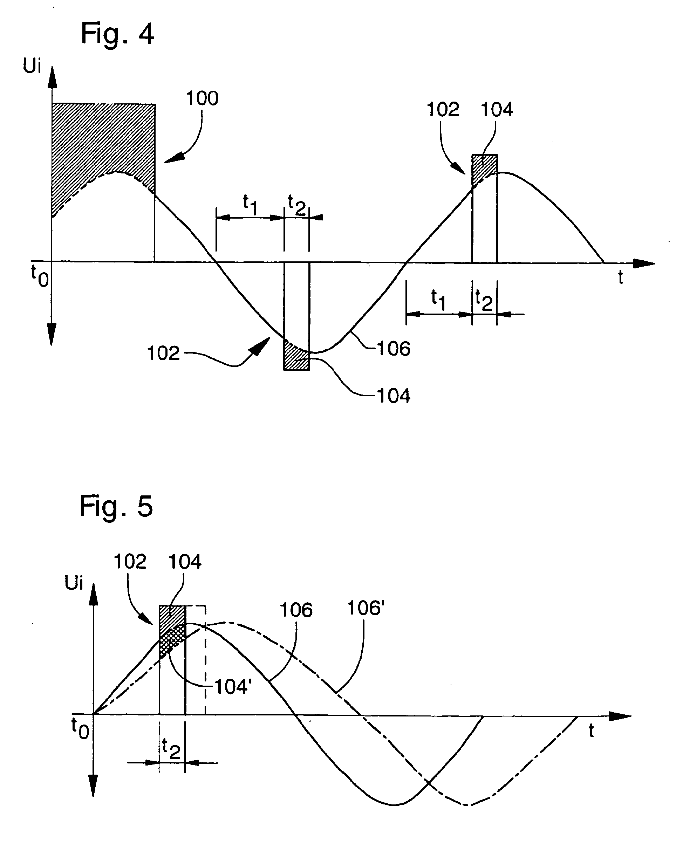

A la figure 4 est représenté schématiquement un mode préféré de fonctionnement du micromoteur selon l'invention. Pour sa mise en oeuvre, on notera qu'il est prévu à la périphérie du micromoteur un aimant permanent 62 servant à positionner le rotor à l'arrêt (figure 1). La direction de cet aimant bipolaire à partir de l'axe de rotation 14 est décalée angulairement relativement à la direction du centre 64 de l'enroulement plat 27, également à partir de cet axe de rotation 14, d'une valeur α non-nulle. De préférence, la valeur de α est inférieure à 30°. Lorsque le micromoteur est à l'arrêt, l'axe longitudinal 32 du rotor est aligné sur la direction de l'aimant de positionnement 62. Cet agencement particulier a pour conséquence qu'au temps tₒ l'amplitude de la courbe de tension induite Uᵢ dans les enroulements 27 et 28 est non-nul. Ainsi, pour permettre le démarrage en rotation du rotor, une impulsion initiale 100 est fournie par les moyens d'alimentation 94 (figure 3) aux enroulements statoriques.

L'impulsion de démarrage 100 est fournie sous une tension relativement élevée, notamment proche ou égale de la tension de la source d'énergie qui est par exemple une pile ou un accumulateur quelconque. Ainsi, l'impulsion de démarrage 100 apporte beaucoup d'énergie au rotor pour lui permettre d'atteindre sensiblement la vitesse de rotation angulaire de référence prévue. Dans une variante, une seule impulsion de démarrage est prévue alors que dans une autre variante, il est possible de prévoir plusieurs impulsions de démarrage avant que le rotor atteigne la vitesse angulaire de référence.

Une fois le démarrage terminé, la rotation du rotor est assurée aux moyens d'impulsions d'entretien 102 qui sont fournies par les moyens d'alimentation, contrôlés par les moyens de commande décrits à la figure 3, lorsque le couplage magnétique entre les bobines statoriques et les aimants rotoriques est proche du maximum. Selon l'invention, chaque impulsion électrique d'entretien est toutefois fournie avant le couplage maximal pour permettre une auto-régulation de l'entretien de la vitesse de rotation du rotor, c'est-à-dire que la valeur temporelle moyenne de cette impulsion d'entretien est située avant la valeur temporelle correspondant à la valeur absolue maximale de la tension induite dans la demi-période concernée de la courbe d'induction, comme cela est montré aux figures 4 et 5.

En effet, l'énergie fournie au micromoteur est définie par la surface 104 située entre la courbe d'induction 106 et le sommet de l'impulsion 102. Lorsque la vitesse de rotation du rotor diminue, la courbe d'induction 106 voit sa période augmenter et la courbe d'induction correspond alors à la courbe 106'. Le sommet 108 de la courbe 106' s'éloigne de l'impulsion 102 de telle sorte que la surface 104 est augmentée de la surface 104' et ainsi l'énergie fournie au micromoteur augmente automatiquement de manière que la vitesse de rotation du rotor augmente à nouveau. Inversément, lorsque la vitesse de rotation du rotor augmente, l'énergie fournie diminue tant que la valeur temporelle moyenne de l'impulsion 102 reste inférieure à la valeur temporelle du prochain sommet (en valeur absolue) de la courbe d'induction. On remarque ainsi que l'intervalle de temps t₁ entre le passage par zéro de la courbe d'induction 106 et le début de l'impulsion d'entretien 102 peut être déterminé avec une valeur constante optimale permettant une auto-régulation d'une vitesse de référence, dans une certaine mesure.

La durée de l'impulsion d'entretien t₂ permet de déterminer la quantité d'énergie fournie par chaque impulsion 102 au rotor, la valeur de t₂ pouvant être fixe ou variable, comme cela est représenté à la figure 5. En effet, pour varier la quantité d'énergie fournie de manière à assurer une régulation de la vitesse de rotation du rotor, les moyens de régulation et les moyens de commande (figure 3) peuvent encore agir sur la durée t₂ de l'impulsion 102 ou sur la tension d'alimentation, notamment en variant le taux de hachage des impulsions d'entretien 102. Il est également possible de prévoir de varier le nombre d'impulsions d'entretien 102 fournies aux bobines statoriques et en particulier de ne pas fournir d'impulsions d'entretien dans certaines demi-périodes de la courbe d'induction.

On notera que la tension de l'impulsion de démarrage 100 est supérieure à la tension des impulsions d'entretien 102 dont la valeur est de préférence proche de la valeur de l'amplitude maximale de la tension induite Uᵢ pour minimiser la consommation d'énergie électrique, comme représenté aux figures 4 et 5. Ainsi, les moyens d'alimentation 94 (figure 3) sont agencés de manière à pouvoir alimenter les bobines statoriques sous une tension de démarrage et sous une tension d'entretien inférieure.

L'homme du métier remarquera, pour autant que les moyens de commande et d'alimentation soient agencés en conséquence, qu'il est possible de prévoir seulement un ou deux enroulement(s) pour entraîner le rotor. Cependant, dans un tel cas, le couplage électromécanique entre les aimants rotoriques et l'enroulement statorique présente une amplitude moindre.

On remarquera qu'il est possible de prévoir un capteur magnétique permettant de déterminer le sens de rotation du rotor et de permettre une commande précise et efficace du micromoteur, notamment en ce qui concerne les positions temporelles des impulsions d'entretien 102 relativement aux positions temporelles de couplage magnétique maximal entre les aimants rotoriques et les bobines statoriques.

## Revendications

1. Procédé de commande d'un micromoteur à rotation continue comprenant un rotor (34) portant des aimants permanents et un stator (52,54) portant au moins une bobine (26, 27, 28) reliée électriquement à des moyens de commande et d'alimentation (80 à 96), lesdits aimants permanents étant agencés radialement sur ledit rotor relativement à ladite au moins une bobine de manière que la rotation dudit rotor engendre dans ladite au moins une bobine une tension induite (Uᵢ) variable définissant une courbe (106) de tension induite alternative au cours du temps, ce procédé étant **caractérisé en ce qu'**il est prévu d'entretenir la rotation dudit rotor par des impulsions successives (102) fournies, dans des demi-périodes respectives de ladite courbe de tension induite, dont la valeur temporelle moyenne est située, pour une vitesse de rotation de référence, avant la valeur temporelle correspondant à la valeur absolue maximale de la tension induite dans chacune de ces demi-périodes.

2. Procédé de commande selon la revendication 1, **caractérisé en ce que** l'intervalle de temps (t₁) entre un passage par zéro de la courbe (106) de tension induite (Uᵢ), définissant le début d'une quelconque demi-période, et le début d'une impulsion d'entretien (102), prévue dans cette demi-période, est constant.

3. Procédé selon la revendication 1 ou 2, **caractérisée en ce que** la durée (t₂) des impulsions d'entretien (102) est sensiblement constante.

4. Procédé selon la revendication 1 ou 2, **caractérisé en ce que** la durée (t₂) des impulsions d'entretien (102) est variable, notamment en fonction de la charge appliquée audit micromoteur ou d'un écart constaté entre la position angulaire du rotor et une position angulaire de référence déterminée par lesdits moyens de commande.

5. Procédé selon l'une des revendications précédentes, **caractérisé en ce qu'**il est prévu au démarrage au moins une impulsion de démarrage (100) fournie sous une tension d'alimentation supérieure à la tension des impulsions d'entretien (102) dont la valeur absolue est proche de la valeur absolue de l'amplitude maximale de ladite tension induite (Uᵢ).

## Claims

1. Method for controlling a continuous rotation miniature motor including a rotor (34) carrying permanent magnets and a stator (52, 54) carrying at least one coil (26, 27, 28) electrically connected to control and supply means (80 to 96), said permanent magnets being arranged radially on said rotor with respect to said at least one coil so that the rotation of said rotor generates in the coil a variable induced voltage (Uᵢ) defining an alternating induced voltage curve (106) as a function of time, this method being **characterised in that** the rotation of said rotor is maintained by successive pulses (102) supplied in respective half periods of said induced voltage curve, the average time value of these successive pulses being located, for a reference rotation speed, before the time value corresponding to the maximum absolute value of the induced voltage in each of these half periods.

2. Control method according to claim 1, **characterised in that** the time interval (t₁) between a passage through zero of the induced voltage (Uᵢ) curve (106), defining the beginning of any half period, and the beginning of a maintenance pulse (102), provided in said half period, is constant.

3. Method according to claim 1 or 2, **characterised in that** the duration (t₂) of the maintenance pulses (102) is substantially constant.

4. Method according to claim 1 or 2, **characterised in that** the duration (t₂) of the maintenance pulses (102) is variable, in particular as a function of the load applied to said miniature motor or of a detected deviation between the angular position of the rotor and a reference angular position determined by said control means.

5. Method according to one of the preceding claims, **characterised in that** at least one starting pulse (100) is provided for starting, this starting pulse being supplied with a supply voltage greater than the voltage of the maintenance pulses (102) whose absolute value is close to the absolute value of the maximum amplitude of said induced voltage (Uᵢ).

## Patentansprüche

1. Verfahren zum Steuern eines kontinuierlich rotierenden Mikromotors, der einen Rotor (34), der Permanentmagneten trägt, und einen Stator (52, 54), der wenigstens eine Spule (26, 27, 28) trägt, die mit Steuer- und Versorgungsmitteln (80 bis 96) elektrisch verbunden ist, umfasst, wobei die Permanentmagneten am Rotor radial relativ zu der wenigstens einen Spule in der Weise angeordnet sind, dass die Drehung des Rotors in der wenigstens einen Spule eine variable Induktionsspannung (Uᵢ) erzeugt, die im Verlauf der Zeit eine Induktionswechselspannungs-Kurve (106) definiert, wobei das Verfahren **dadurch gekennzeichnet ist, dass** vorgesehen ist, die Drehung des Rotors durch aufeinander folgende Impulse (102) aufrecht zu erhalten, die in den jeweiligen Halbperioden der Induktionsspannungskurve geliefert werden, deren mittlerer Zeitwert sich bei einer Referenzdrehgeschwindigkeit vor dem Zeitwert befindet, der dem maximalen Absolutwert der Induktionsspannung in jeder dieser Halbperioden entspricht.

2. Steuerverfahren nach Anspruch 1, **dadurch gekennzeichnet, dass** das Zeitintervall (t₁) zwischen einem Nulldurchgang der Kurve (106) der Induktionsspannung (Uᵢ), der den Beginn einer beliebigen Halbperiode definiert, und dem Beginn eines Aufrechterhaltungsimpulses (102), der in dieser Halbperiode vorgesehen ist, konstant ist.

3. Verfahren nach Anspruch 1 oder 2, **dadurch gekennzeichnet, dass** die Dauer (t₂) der Aufrechterhaltungsimpulse (102) im Wesentlichen konstant ist.

4. Verfahren nach Anspruch 1 oder 2, **dadurch gekennzeichnet, dass** die Dauer (t₂) der Aufrechterhaltungsimpulse (102) insbesondere als Funktion der an den Mikromotor angelegten Last oder eines zwischen der Winkelposition des Rotors und einer durch die Steuermittel bestimmten Referenzwinkelposition festgestellten Abstands variabel ist.

5. Verfahren nach einem der vorhergehenden Anspräche, **dadurch gekennzeichnet, dass** es am Beginn wenigstens eines Anfangsimpulses (100) vorgesehen ist, der unter einer Versorgungsspannung größer als die Spannung der Aufrechterhaltungsimpulse (102) geliefert wird, deren Absolutwert in der Nähe des Absolutwerts der maximalen Amplitude der Induktionsspannung (Uᵢ) liegt.
